# EUROPÄISCHE PATENTSCHRIFT

(11) **EP 3 926 121 B1**
(45) Veröffentlichungstag und Bekanntmachung des Hinweises auf die Patenterteilung: **07.02.2024**
(21) Anmeldenummer: 21176291.9
(22) Anmeldetag: 27.05.2021
(51) Int. Cl.: E04F 11/18, E04F 13/08, F16B 5/02, F24S 25/617

(54) **VERSTELLBARER PUNKTHALTER**
ADJUSTABLE SPOT HOLDER
SUPPORT PONCTUEL RÉGLABLE

(30) Priorität: 15.06.2020 AT 505142020
(43) Veröffentlichungstag der Anmeldung: 22.12.2021
(73) Patentinhaber: Weiss, Rupert, 6511 Zams (AT)
(72) Erfinder: WEISS, Rupert, 6511 Zams (AT); TRESSL, Christof, 3074 Michelbach (AT)
(74) Vertreter: Babeluk, Michael

(56) Entgegenhaltungen:
- EP-B1- 0 606 880
- DE-A1- 3 220 474
- IT-A1- UA20 163 588

## Beschreibung

Die Erfindung betrifft einen mehrteiligen, verstellbaren Punkthalter zur Befestigung von Anbauteilen, wie Brüstungen, Geländer, Fassadenelemente, Solarpaneele, oder dgl. an einem Bauteil, beispielsweise einer Balkonplatte, einer Attika oder einer Fassade.

Aus der US 2017/0101784 A1 ist in diesem Zusammenhang ein Halteprofil mit einer U-förmigen Aufnahme für die einseitige Klemmung einer Glasscheibe bekannt geworden, wobei die Klemmung beidseitig durch gegeneinander verschiebbare Klemmkeile erfolgt. Die U-förmige Aufnahme weist in deren Basis Öffnungen für ein Befestigungsmittel auf. Durch diese Öffnungen für das Befestigungsmittel kann jedoch in nachteiliger Weise auch Wasser (Kondensat und/oder Regenwasser) in die tragende Struktur eindringen und dadurch Bauschäden und Sicherheitsmängel an der Glasbrüstung verursachen, deren Behebung hohe Folgekosten nach sich ziehen.

Aus der EP 2 905 514 A1 ist eine Vorrichtung zur Befestigung einer Brüstungsplatte, beispielsweise aus Glas bekannt, welche im Wesentlichen aus einem U-förmigen Aluminiumprofil besteht, in dessen oben offener, U-förmiger Aufnahme der untere Rand der Brüstungsplatte eingesetzt und in bekannter Weise durch Klotzkeile fixiert wird. Zur Befestigung des Aluminiumprofils am Bauteil sind in der Basis der U-förmigen Aufnahme, die direkt am Bauteil aufsitzt, Öffnungen vorgesehen, die von einer Gewindeschraube durchsetzt werden. In die Öffnung wird ein flexibles Dichtelement mit einer passenden Durchgangsöffnung für die Gewindeschraube eingesetzt. Nachteilig an dieser Konstruktion ist die durchgehende Öffnung von der U-förmigen Aufnahme des Profils bis in die Bohrung im Bauteil, die bei langer Standzeit und altersbedingter Verminderung der Dichtfunktion einer Dichtung zur Brüstungsplatte sowie des flexiblen Dichtelements dazu führt, dass durch die Öffnungen in der Basis Wasser (Kondensat und/oder Regenwasser) in die tragende Struktur eindringen kann, wodurch die bereits oben beschriebenen Bauschäden und Sicherheitsmängel auftreten können.

Aus der US 2001/025953 A1 ist eine Haltevorrichtung zur Befestigung von Geländerplatten aus Glas bekannt, deren Halteprofil zur randseitigen Aufnahme der Glasplatten einteilig oder mehrteilig ausgeführt sein kann und in einem durchgehenden Adapterprofil verankert ist, das am Bauteil mittels Schrauben befestigt ist.

Das Halteprofil, bzw. deren einzelnen Abschnitte sind mit Hilfe eines Klemmschenkels am Adapterprofil befestigt. Nachteilig bei der Montage ist das durchgehende Adapterprofil, das eine Anpassung an Unebenheiten des Bauteils, beispielsweise einer Balkonplatte, erschwert. Weiters weist das Adapterprofil kein Dichtmittel zur Abdichtung gegenüber dem Bauteil auf.

Aus der AT 520191 B1 ist eine Haltevorrichtung bekannt geworden, die beispielsweise zur Befestigung einer Verbundglasplatte dient. Das Halteprofil für die Verbundglasplatte weist an der von deren Klemmschenkeln abgewandten Seite eine bauteilseitige Aufnahme auf, die durch zwei von der Basis ausgehende Befestigungsschenkel gebildet wird. Das Halteprofil weist somit eine im Wesentlichen H-förmige Struktur auf, wobei an einer Seite die Aufnahme für die Verbundglasplatte und an der anderen Seite eine Aufnahme für Adapterelemente ausgebildet ist, die mit Abstand zueinander am Bauteil befestigt werden. Der Fußbereich der Adapterelemente ist mit einem Dichtmittel zur Abdichtung gegenüber dem Bauteil ausgestattet, wobei der Kopfbereich der Adapterelemente in die bauteilseitige Aufnahme des Halteprofils ragt und dort mittels Schrauben, die die Befestigungsschenkel durchsetzen, befestigt ist. Die Befestigung der Adapterelemente am Bauteil erfolgt hier entkoppelt von der Befestigung der Klemmeinrichtung für die Verbundglasplatte, wobei durch die Abdichtung der Adapterelemente zum Bauteil ein Wasserzutritt zum Bauteil weitgehend ausgeschlossen ist. Ein Ausgleich von Unebenheiten des Bauteils, beispielsweise einer Balkonplatte, ist jedoch auch mit dieser Haltevorrichtung nicht erzielbar.

In der DE 103 18 276 A1 wird eine an einer Unterkonstruktion befestigte Halterung für Platten beschrieben, die verstellbar ausgeführt ist. Die Halterung ist über ein mit einer Unterkonstruktion drehfest verschweißtes Anschlussglied an der Unterkonstruktion befestigt, wobei das Anschlussglied ein Anschlussgewinde zur Verbindung mit einem die Platte gegenüber der Unterkonstruktion distanzierenden Distanzelement aufweist. Das Distanzelement weist an seinem der Platte zugewandten Ende ein Anschlussgewinde zur Verbindung mit einem Plattenhalter auf. Das Distanzelement ist relativ zum Anschlussglied und zum Plattenhalter axial verstellbar und mittels Wurmschrauben feststellbar ausgeführt.

Aus der DE 32 20 474 A1 ist eine Vorrichtung zur Abstandsbefestigung von Verkleidungsplatten an einer Tragewand bekannt. Diese besteht im Wesentlichen aus einem Anker, einem Reduktionsnippel und einem Justierelement. Der in die Tragewand eingreifende Anker kann verschiedene Merkmale aufweisen. Es können fast alle bekannten Maueranker, wie Verbundanker, Ankerstanden, Anker mit Spreizelement, Rohranker und Dübel Verwendung finden, sofern das aus der Tragewand herausragende Ende des Ankers einen Gewindekopf aufweist, oder mit einem Gewindeteil - ähnlich dem Reduktionsnippel - fest verbunden werden kann.

Als Anker kann ein weit verbreiteter, handelsüblicher Kunststoff-Spreizdübel mit Kunststoff-Rohr, Dichtbund und Ankerschraube Verwendung finden. Als Besonderheit weist die aus dem Dichtbund herausragende Ankerschraube einen Gewindekopf auf.

Die IT UA 20 163 588 A1 zeigt einen zur Gänze im Mauerwerk bzw, in einem Verkleidungselement der Mauer aufgenommenen Punkthalter, der zur Befestigung von Abstandslasten an Gebäudewänden dient. Zur Aufnahme einer Befestigungsschraube für ein Anbauteil ist im Punkthalter ein Gewindesackloch vorgesehen.

Aus der EP 0 606 880 B1 ist eine Vorrichtung zur Befestigung eines plattenförmigen Bauteils an einer Wand bekannt. Die mehrteilige Vorrichtung weist gemäß einer Ausführungsvariante eine Spannscheibe auf, die an ihrem Umfang mit Mitteln in Form von Löchern, Zähnen oder dergleichen versehen ist, um mit einem hakenförmigen Werkzeug auf einen Sockelteil der Vorrichtung aufgeschraubt zu werden.

Aufgabe der vorliegenden Erfindung ist es, Haltemittel zur Befestigung von Anbauteilen, wie Brüstungen, Geländer, Fassadenelemente, Solarpaneele, oder dgl., an einem Bauteil bereit zu stellen, mit welchen Unebenheiten des Bauteils auf einfache Weise ausgeglichen werden können und das Eindringen von Kondenswasser und/oder Regenwasser in das Bauteil bzw. in die tragenden Strukturen langfristig vermieden wird. Gleichzeitig sollen die Haltemittel einfach montierbar sein und ein ästhetisches Erscheinungsbild zeigen.

Diese Aufgabe wird erfindungsgemäß durch einen mehrteiligen, verstellbaren Punkthalter gelöst, der folgende Teile aufweist:
- ein Basiselement, dessen Fußbereich eine Durchgangsöffnung zur Aufnahme eines Befestigungsmittels aufweist und mit einem vom Fußbereich fortragenden Schraubflansch ausgestattet ist,
- ein Zwischenelement, das am Schraubflansch des Basiselements befestigbar ist und ein Gewindesackloch zur Aufnahme einer Befestigungsschraube für das Anbauteil aufweist, sowie
- ein Justierelement mit einem Schraubflansch, mit dessen Hilfe ein vorgebbarer Abstand zwischen dem Justierelement und dem Zwischenelement einstellbar ist, wobei das Justierelement eine zentrale Durchgangsöffnung für die Befestigungsschraube des an der Stirnseite des Justierelements anliegenden Anbauteils aufweist.

Da das Zwischenelement abdichtend am Schraubflansch des Basiselements befestigt wird, kann ein Vordringen von Kondenswasser und/oder Regenwasser zum Befestigungsmittel (bevorzugt eine Dübelschraube, ein Klebeanker oder ein Schlaganker) verhindert werden. Zur Verbesserung der Dichtwirkung zum Bauteil ist der Fußbereich des Basiselements bauteilseitig zusätzlich mit einem Dichtmittel zur Abdichtung gegenüber dem Bauteil ausgestattet.

Die Höhenjustierung des Punkthalters im Bereich von beispielsweise 0 mm bis 10 mm erfolgt mit dem Schraubflansch des Justierelements der zum Ausgleich von Unebenheiten bis zum gewünschten Abstand auf die am Bauteil fixierten Teile des Punkthalters aufgeschraubt und mittels der Befestigungsschraube für das Anbauteil im eingestellten Abstand fixiert wird.

Gemäß einer ersten Ausführungsvariante der Erfindung weist der Schraubflansch des Justierelements ein Innengewinde auf, das in das Außengewinde einer zylindrischen Anformung des Zwischenelements eingreift. Das Innengewinde des Justierelements und das Außengewinde der zylindrischen Anformung können für eine exakte Justierung als Feingewinde ausgeführt sein. Die zylindrischen Mantelflächen der einzelnen Bauteile des Punkthalters können gleiche Außendurchmesser aufweisen, sodass ein einfach montierbarer Punkthalter mit einem ästhetischen Erscheinungsbild realisierbar ist.

Gemäß einer zweiten Ausführungsvariante der Erfindung weist der Schraubflansch des Justierelements ein Innengewinde auf, das in das Außengewinde des Schraubflansches des Basiselements eingreift. Bei dieser Variante übergreift der Schraubflansch des Justierelements das am Basiselement fixierte Zwischenelement zur Gänze und greift in Justierstellung in das Außengewinde des Basiselements ein. Im zusammengebauten Zustand sind hier in einer Seitenansicht nur die zylindrischen Mantelflächen des Basiselements und des Justierelements sichtbar.

Um auch örtliche Neigungsunterschiede des Bauteils, beispielsweise einer Balkonplatte, ausgleichen zu können, kann das Justierelement eine Stirnseite aufweisen, deren Flächennormale zur zentralen Achse des Punkthalters in einem Winkel α von 1° bis 3° geneigt ausgeführt ist. Insbesondere falls das Justiergewinde als Feingewinde ausgeführt ist, kann bei nur geringer Abweichung der Höheneinstellung - durch eine Drehbewegung des Justierelements - die Ausrichtung des Anbauteils in die gewünschte Lage korrigiert werden. Der erfindungsgemäße Punkthalter erlaubt somit eine dreidimensionale Justierung von damit befestigten Anbauteilen.

Die Erfindung wird im Folgenden anhand von Ausführungsbeispielen näher erläutert. Es zeigen:
- Fig. 1: eine erste Ausführungsvariante des erfindungsgemäßen, mehrteiligen Punkthalters mit einem daran befestigte Anbauteil (Geländer mit Verbundglasplatte) in einer Schnittdarstellung entlang der zentralen Achse des Punkthalters;
- Fig. 2: ein Justierelement des Punkthalters in einer vergrößerten Schnittdarstellung gemäß Fig. 1;
- Fig. 3: ein Zwischenelement des Punkthalters in einer vergrößerten Schnittdarstellung gemäß Fig. 1;
- Fig. 4: ein Basiselement des Punkthalters in einer vergrößerten Schnittdarstellung gemäß Fig. 1;
- Fig. 5: den Punkthalter gemäß Fig. 1 in einer Seitenansicht ohne Anbauteile;
- Fig. 6: den Punkthalter in einer Schnittdarstellung gemäß Fig. 1 mit einem Justierabstand A₁;
- Fig. 7: eine zweite Ausführungsvariante des erfindungsgemäßen, mehrteiligen Punkthalters in einer Explosionsdarstellung in einer Ansicht von schräg unten;
- Fig. 8: die zweite Ausführungsvariante des erfindungsgemäßen, mehrteiligen Punkthalters in einer Explosionsdarstellung in einer Ansicht von schräg oben;
- Fig. 9: den Punkthalter gemäß Fig. 7 und Fig. 8 in zusammengebautem Zustand in einer dreidimensionalen Ansicht; sowie
- Fig.10: den Punkthalter gemäß Fig. 9 in einer Schnittdarstellung.

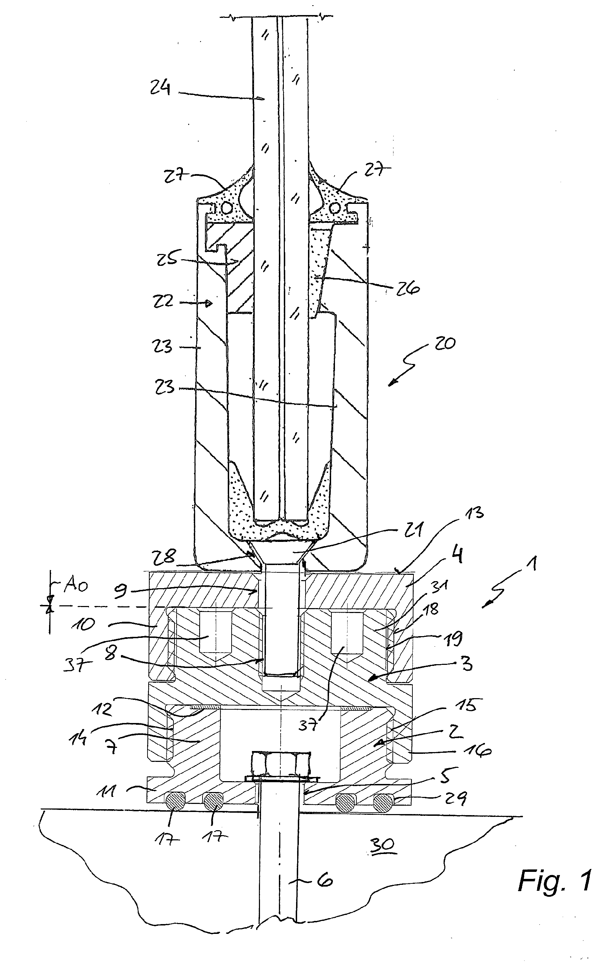

Der in Fig. 1 dargestellte Punkthalter 1 (bzw. mehrere derartige Punkthalter 1 in Reihe angeordnet) dient zur Befestigung eines Anbauteils 20 (im dargestellten Beispiel ein Geländer mit einer Verbundglasplatte 24, die in einem Halteprofil 22 befestigt ist) an einem Bauteil 30, beispielsweise einer Balkonplatte.

Das Geländer weist ein Halteprofil 22 auf, dessen Basis mit den beiden Klemmschenkeln 23 eine U-förmige Aufnahme für den unteren Rand der Verbundglasplatte 24 bilden. Die Verbundglasplatte 24 ist - in herkömmlicher Weise - beispielsweise mit Hilfe eines Ausrichtelements 25 an einer Seite und einem Klotzkeil 26 an der gegenüberliegenden Seite befestigt. Am oberen Rand der Klemmschenkel 23 sind in entsprechenden nutförmigen Aufnahmen auf die Verbundglasplatte 24 wirkende Dichtelemente 27, vorzugsweise Silikondichtungen, angeordnet.

Das Halteprofil 22 weist an der Basis eine Durchgangsbohrung 28 auf, die von einer im Punkthalter 1 fixierten Befestigungsschraube 21 durchsetzt wird.

Der verstellbare Punkthalter 1 besteht im Wesentlichen aus drei Teilen, nämlich ausgehend vom Bauteil 30 aus:
- einem Basiselement 2, dessen Fußbereich eine Durchgangsöffnung 5 zur Aufnahme eines Befestigungsmittels 6 aufweist und mit einem vom Fußbereich fortragenden, die Durchgangsöffnung 5 umfassenden Schraubflansch 7 ausgestattet ist,
- einem Zwischenelement 3, das am Schraubflansch 7 des Basiselements 2 befestigbar ist und ein Gewindesackloch 8 zur Aufnahme einer Befestigungsschraube 21 für das Anbauteil 20 aufweist, sowie
- einem Justierelement 4 mit einem Schraubflansch 10, mit dessen Hilfe ein vorgebbarer Abstand zwischen dem Justierelement 4 und dem Zwischenelement 3 einstellbar ist, wobei das Justierelement 4 eine zentrale Durchgangsöffnung 9 für die Befestigungsschraube 21 des an der Stirnseite 13 des Justierelements 4 anliegenden Anbauteils 20 aufweist.

Der Fußbereich 11 des Basiselements 2 ist in Richtung Bauteil 30 mit einem Dichtmittel 11 ausgestattet. Im dargestellten Beispiel sind als Dichtmittel 11 zwei O-Ringe vorgesehen, die in konzentrisch um die Durchgangsöffnung 5 ausgeführten Ringnuten 29 angeordnet sind.

Zwischen dem Schraubflansch 7 des Basiselements 2 und dem Zwischenelement 3 ist ein Dichtelement 12 angeordnet, sodass bei aufgeschraubtem Zwischenelement 3 ein dicht abgeschlossener Aufnahmeraum für den Kopf der Dübelschraube oder des Schlagankers 6 gebildet wird. Das Eindringen von Regen- oder Kondenswasser in das Bauteil 30 wird durch diese Anordnung auch bei langer Standzeit wirksam verhindert.

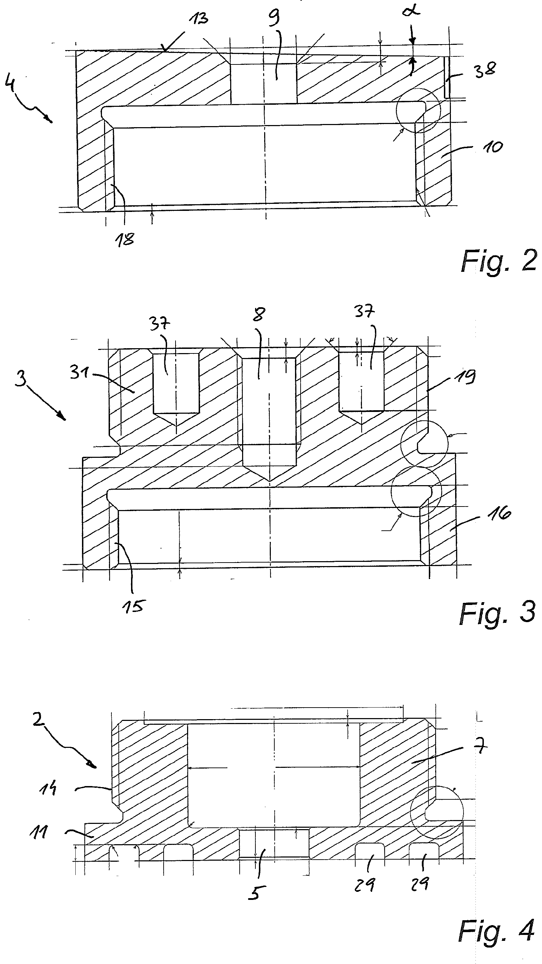

In den Fig. 2 bis Fig. 4 sind die einzelnen Teile des Punkthalters (erste Variante) im Detail dargestellt.

Der Schraubflansch 7 des Basiselements 2 (siehe Fig. 4) weist ein Außengewinde 14 auf, das in das Innengewinde 15 eines hülsenartigen Mantelbereichs 16 des Zwischenelements 3 (siehe Fig. 3) eingreift. Zum Festschrauben des Zwischenelements 3 (unter Zwischenlage des Dichtelements 12), weist das Zwischenelement 3 in einem konzentrisch zum Gewindesackloch 8 angeordneten Kreisbereich Sacklochbohrungen 37 für den Einsatz eines Montagewerkzeugs (nicht dargestellt) auf.

Im Fußbereich 11 des Basiselements 2 sind ringförmige Nuten 29 für Dichtmittel 17, beispielsweise O-Ring-Dichtungen, (siehe Fig. 1) angeordnet.

Der Schraubflansch 10 des Justierelements 4 (siehe Fig. 2) weist ein Innengewinde 18 auf, das in das Außengewinde 19 einer zylindrischen Anformung 31 des Zwischenelements 3 eingreift. Das Innengewinde 18 und das Außengewinde 19 können als Feingewinde ausgeführt sein.

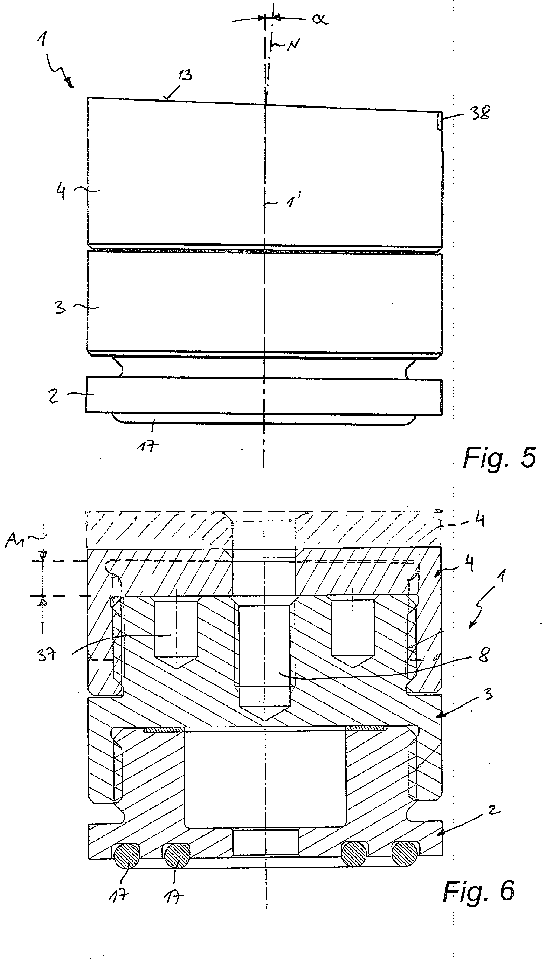

Zur allfälligen Einjustierung der Neigung eines Anbauteils zum Ausgleich örtlicher Unebenheiten oder Neigungsunterschiede des Bauteils kann das Justierelement 4 eine Stirnseite 13 aufweisen, deren Flächennormale N zur zentralen Achse 1' des Punkthalters 1 im Winkel α von beispielsweise 1° bis 3° geneigt ausgeführt ist (siehe Fig. 5). Das Justierelement 4 kann am tiefsten Punkt der geneigten Stirnseite 13 eine Markierung 38 aufweisen.

In Fig. 6 ist ein Punkthalters 1 im Querschnitt dargestellt, bei welchem zwischen dem Justierelement 4 und dem Zwischenelement 3 ein Abstand A₁ (z.B. 5 mm) ausgehend von einem Abstand A₀ (siehe Fig. 1) für Justierzwecke eingestellt ist (siehe strichlierte Darstellung des Justierelements). Die Gesamthöhe des Punkthalters 1 erhöht sich dadurch um den Abstand A₁. Das Justierelement 4 wird durch das Festziehen der Befestigungsschraube 21 im Gewindesackloch 8 des Zwischenelements 3 - gleichzeitig mit der Befestigung des Anbauteils 20 - fixiert.

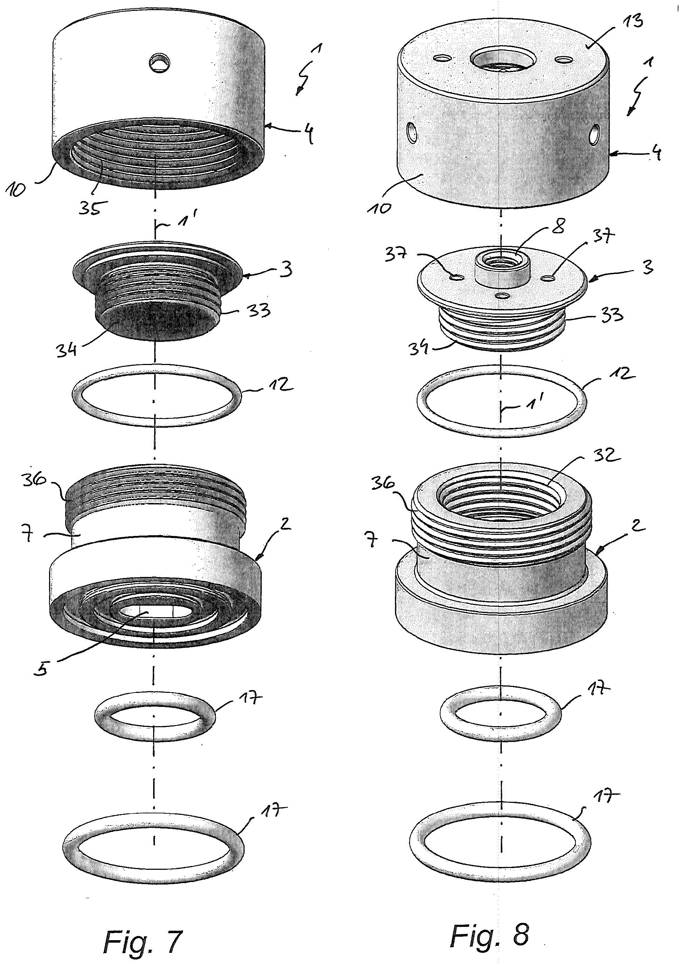

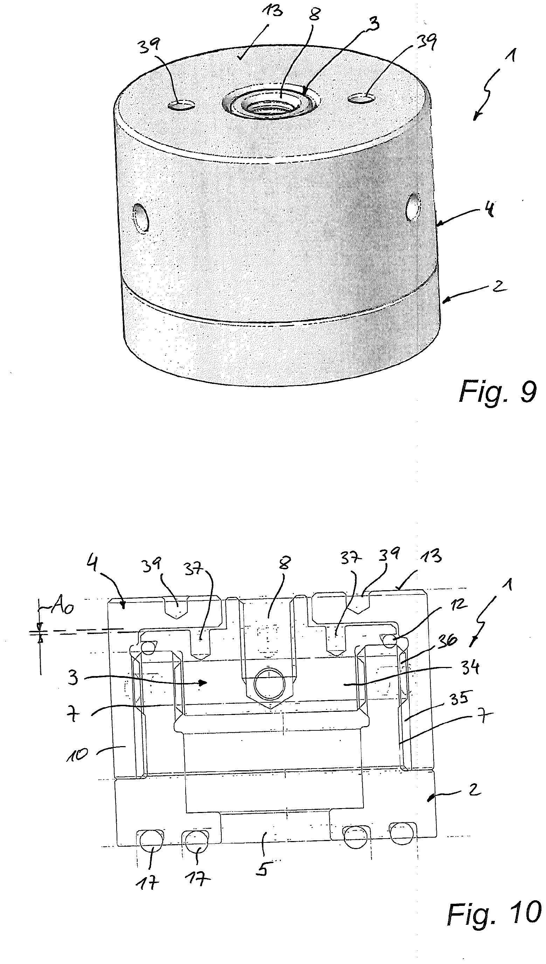

Die in den Fig. 7 bis Fig. 10 dargestellte, zweite Ausführungsvariante der Erfindung unterscheidet sich vor allem dadurch von der ersten Variante, dass der Schraubflansch 10 des Justierelements 4 das Zwischenelement 3 übergreift und direkt mit dem Basiselement 2 verschraubt ist (siehe dreidimensionale Ansicht gemäß Fig. 9 sowie Schnittdarstellung gemäß Fig. 10).

Die einzelnen Teile der zweiten Ausführungsvariante des erfindungsgemäßen Punkthalters sind in den Explosionsdarstellungen gemäß Fig. 7 und Fig. 8 im Detail dargestellt.

Der Schraubflansch 7 des Basiselements 2 weist bei dieser Variante ein Innengewinde 32 auf, das in das Außengewinde 33 einer zylindrischen Anformung 34 des Zwischenelements 3 eingreift. Weiters weist der Schraubflansch 10 des Justierelements 4 ein Innengewinde 35 auf, das in das Außengewinde 36 des Schraubflansches 7 des Basiselements 2 eingreift. Damit kann ausgehend vom Justierabstand A₀ der Abstand vergrößert werden, solange ein für die Standfestigkeit ausreichender Eingriff des Außengewindes 36 in das Innengewinde 35 gewährleistet ist (siehe Fig. 10).

Am Zwischenelement 3 sind in einem konzentrisch zum Gewindesackloch 8 angeordneten Kreisbereich Sacklochbohrungen 37 für den Einsatz eines Montagewerkzeugs (nicht dargestellt) vorgesehen. In gleicher Weise sind entsprechende Sacklochbohrungen 39 in der Stirnseite 13 des Justierelements 4 vorgesehen.

Das zwischen dem Schraubflansch 7 des Basiselements 2 und dem Zwischenelement 3 angeordnete Dichtelement 12 ist hier als O-Ring-Dichtung ausgeführt.

Die Durchgangsöffnung 5 des Basiselements 2 kann bevorzugt als Langloch ausgeführt sein (siehe Fig. 7), sodass der Punkthalter 2 nicht nur in der Höhe, sondern auch seitlich zur zentralen Achse 1' justierbar ist. Mit einer geneigt ausgeführten Stirnseite 13 des Justierelements 4 kann somit auf einfache Weise eine Justierung in allen Raumrichtungen x, y, z und der Neigung vorgenommen werden.

## Patentansprüche

1. Mehrteiliger, verstellbarer Punkthalter (1) zur Befestigung von Anbauteilen (20), wie Brüstungen, Geländer, Fassadenelemente, Solarpaneele, oder dgl. an einem Bauteil (30), beispielsweise einer Balkonplatte, einer Attika oder einer Fassade, aufweisend,
ein Basiselement (2), dessen Fußbereich (11) eine Durchgangsöffnung (5) zur Aufnahme eines Befestigungsmittels (6) aufweist und mit einem vom Fußbereich (11) fortragenden Schraubflansch (7) ausgestattet ist, und
ein Zwischenelement (3), das am Schraubflansch (7) des Basiselements (2) befestigbar ist und ein Gewindesackloch (8) zur Aufnahme einer Befestigungsschraube (21) für das Anbauteil (20) aufweist,
wobei der Punkthalter **gekennzeichnet ist durch** ein Justierelement (4) mit einem Schraubflansch (10), mit dessen Hilfe ein vorgebbarer Abstand zwischen dem Justierelement (4) und dem Zwischenelement (3) einstellbar ist, wobei das Justierelement (4) eine zentrale Durchgangsöffnung (9) für die Befestigungsschraube (21) des an der Stirnseite (13) des Justierelements (4) anliegenden Anbauteils (20) aufweist.

2. Punkthalter (1) nach Anspruch 1, **dadurch gekennzeichnet, dass** der Fußbereich (11) des Basiselements (2) bauteilseitig über Dichtmittel (17) zur Abdichtung gegenüber dem Bauteil (30) verfügt.

3. Punkthalter (1) nach Anspruch 1 oder 2, **dadurch gekennzeichnet, dass** zwischen dem Schraubflansch (7) des Basiselements (2) und dem Zwischenelement (3) ein Dichtelement (12) angeordnet ist.

4. Punkthalter (1) nach einem der Ansprüche 1 bis 3, **dadurch gekennzeichnet, dass** der Schraubflansch (7) des Basiselements (2) ein Außengewinde (14) aufweist, das in das Innengewinde (15) eines hülsenartigen Mantelbereichs (16) des Zwischenelements (3) eingreift.

5. Punkthalter (1) nach einem der Ansprüche 1 bis 4, **dadurch gekennzeichnet, dass** der Schraubflansch (10) des Justierelements (4) ein Innengewinde (18) aufweist, das in das Außengewinde (19) einer zylindrischen Anformung (31) des Zwischenelements (3) eingreift.

6. Punkthalter (1) nach einem der Ansprüche 1 bis 3, **dadurch gekennzeichnet, dass** der Schraubflansch (7) des Basiselements (2) ein Innengewinde (32) aufweist, das in das Außengewinde (33) einer zylindrischen Anformung (34) des Zwischenelements (3) eingreift.

7. Punkthalter (1) nach Anspruch 6, **dadurch gekennzeichnet, dass** der Schraubflansch (10) des Justierelements (4) ein Innengewinde (35) aufweist, das in das Außengewinde (36) des Schraubflansches (7) des Basiselements (2) eingreift.

8. Punkthalter (1) nach einem der Ansprüche 1 bis 7, **dadurch gekennzeichnet, dass** das Zwischenelement (3) in einem konzentrisch zum Gewindesackloch (8) angeordneten Kreisbereich Sacklochbohrungen (37) für den Einsatz eines Montagewerkzeugs aufweist.

9. Punkthalter (1) nach einem der Ansprüche 1 bis 8, **dadurch gekennzeichnet, dass** die Durchgangsöffnung (5) des Basiselements (2) als Langloch ausgeführt ist.

10. Punkthalter (1) nach einem der Ansprüche 1 bis 9, **dadurch gekennzeichnet, dass** das Justierelement (4) eine Stirnseite (13) aufweist, deren Flächennormale (N) zur zentralen Achse (1') des Punkthalters (1) in einem Winkel α von 1° bis 3° geneigt ausgeführt ist.

11. Punkthalter (1) nach Anspruch 10, **dadurch gekennzeichnet, dass** das Justierelement (4) am tiefsten Punkt der geneigten Stirnseite (13) eine Markierung (38) aufweist.

## Claims

1. Multi-part, adjustable point holder (1) for fastening attachment parts (20) such as balustrades, railings, façade elements, solar panels or the like to a component (30), for example a balcony slab, a parapet or a façade, comprising a base element (2), the base region (11) of which has a through-opening (5) for accommodating a fastening means (6) and is provided with a screw flange (7) projecting from the base region (11), and an intermediate element (3) which can be fastened to the screw flange (7) of the base element (2) and has a threaded blind hole (8) for accommodating a fastening screw (21) for the attachment part (20), wherein the point holder is **characterized by** an adjusting element (4) with a screw flange (10), with the aid of which a predeterminable distance between the adjusting element (4) and the intermediate element (3) can be adjusted, wherein the adjusting element (4) has a central through-opening (9) for the fastening screw (21) of the attachment part (20) resting against the end face (13) of the adjusting element (4).

2. Point holder (1) according to claim 1, **characterised in that** the base region (11) of the base element (2) has sealing means (17) on the component side for sealing against the component (30).

3. Point holder (1) according to claim 1 or 2, **characterised in that** a sealing element (12) is arranged between the screw flange (7) of the base element (2) and the intermediate element (3).

4. Point holder (1) according to one of claims 1 to 3, **characterised in that** the screw flange (7) of the base element (2) has an external thread (14) which engages in the internal thread (15) of a sleeve-like jacket region (16) of the intermediate element (3).

5. Point holder (1) according to one of claims 1 to 4, **characterised in that** the screw flange (10) of the adjusting element (4) has an internal thread (18) which engages in the external thread (19) of a cylindrical molded attachment (31) of the intermediate element (3).

6. Point holder (1) according to one of claims 1 to 3, **characterised in that** the screw flange (7) of the base element (2) has an internal thread (32) which engages in the external thread (33) of a cylindrical molded attachment (34) of the intermediate element (3).

7. Point holder (1) according to claim 6, **characterised in that** the screw flange (10) of the adjusting element (4) has an internal thread (35) which engages in the external thread (36) of the screw flange (7) of the base element (2).

8. Point holder (1) according to one of claims 1 to 7, **characterised in that** the intermediate element (3) has blind holes (37) for the use of an assembly tool in a circular region arranged concentrically to the threaded blind hole (8).

9. Point holder (1) according to one of claims 1 to 8, **characterised in that** the through-opening (5) of the base element (2) is designed as an elongated hole.

10. Point holder (1) according to one of claims 1 to 9, **characterized in that** the adjusting element (4) has an end face (13), the surface normal (N) of which is inclined at an angle α of 1° to 3° to the central axis (1') of the point holder (1).

11. Point holder (1) according to claim 10, **characterised in that** the adjusting element (4) has a marking (38) at the lowest point of the inclined end face (13).

## Revendications

1. Support ponctuel réglable en plusieurs parties (1) pour la fixation d'éléments rapportés (20) tel que des rambardes, des garde-fous, des éléments de façade, des panneaux solaires ou autres à un composant (30), par exemple, un plateau de balcon, un attique ou une façade, comprenant :
un élément de base (2) dont la zone inférieure (11) a un orifice traversant (5) pour recevoir un moyen de fixation (6) et est équipée d'une bride vissée (7) en saillie par rapport à la zone inférieure (11), et
un élément intermédiaire (3) qui se fixe à la bride vissée (7) de l'élément de base (2) ainsi qu'un taraudage borgne (8) pour recevoir une vis de fixation (21) pour l'élément rapporté (20),
le support ponctuel étant **caractérisé par**
- un élément de réglage (4) avec une bride à visser (10) pour régler une distance prédéfinie entre l'élément de réglage (4) et l'élément intermédiaire (3), et
- l'élément de réglage (4) comporte un orifice central traversant (9) pour la vis de fixation (21) de l'élément rapporté (20) appliqué contre la face frontale (13) de l'élément de réglage (4).

2. Support ponctuel (1) selon la revendication 1,
**caractérisé en ce que**
la zone inférieure (11) de l'élément de base (2), côté composant a un moyen d'étanchéité (17) pour assurer l'étanchéité par rapport au composant (30).

3. Support ponctuel (1) selon la revendication 1 ou 2,
**caractérisé par**
un élément d'étanchéité (12) entre la bride vissée (7) de l'élément de base (2) et l'élément intermédiaire (3).

4. Support ponctuel (1) selon l'une des revendications 1 à 3,
**caractérisé en ce que**
la bride vissée (7) de l'élément de base (2) a un filetage extérieur (14) qui vient dans le filetage intérieur (15) d'une zone enveloppe en forme de manchon (16) de l'élément intermédiaire (3).

5. Support ponctuel (1) selon l'une des revendications 1 à 4,
**caractérisé en ce que**
la bride à visser (10) de l'élément d'ajustage (4) a un filetage intérieur (18) qui prend dans le filetage extérieur (19) d'une forme cylindrique (31) de l'élément intermédiaire (3).

6. Support ponctuel (1) selon l'une des revendications 1 à 3,
**caractérisé en ce que**
la bride vissée (7) de l'élément de base (2) a un filetage intérieur (32) qui prend dans le filetage extérieur (33) d'une forme cylindrique (34) de l'élément intermédiaire (3).

7. Support ponctuel (1) selon la revendication 6,
**caractérisé en ce que**
la bride à visser (10) de l'élément ajusté (4) a un filetage intérieur (35) qui prend, dans le filetage extérieur (36) de la bride vissée (7) de l'élément de base (2).

8. Support ponctuel (1) selon l'une des revendications 1 à 7,
**caractérisé par**
des perçages borgnes (37) dans une zone circulaire concentrique au perçage borgne taraudé (8) de l'élément intermédiaire (3) pour recevoir un outil de montage.

9. Support ponctuel (1) selon l'une des revendications 1 à 8,
**caractérisé en ce que**
l'orifice traversant (5) de l'élément de base (2) est un trou oblong.

10. Support ponctuel (1) selon l'une des revendications 1 à 9,
**caractérisé en ce que**
l'élément de réglage (4) a une face frontale (13) dont la normale (N) à l'axe central (1') du support ponctuel (1) est inclinée avec un angle α compris entre 1° et 3°.

11. Support ponctuel (1) selon la revendication 10,
**caractérisé en ce que**
l'élément de réglage (4) comporte un marquage (38) au point le plus bas de la face frontale inclinée (13).
